# EUROPÄISCHE PATENTSCHRIFT

(11) **EP 3 426 457 B1**
(45) Veröffentlichungstag und Bekanntmachung des Hinweises auf die Patenterteilung: **14.09.2022**
(21) Anmeldenummer: 17707857.3
(22) Anmeldetag: 28.02.2017
(51) Int. Cl.: B29C 45/14, B29C 45/33, B29C 45/44, B62D 1/185, F16D 3/06, F16C 3/03

(54) **VERFAHREN ZUR HERSTELLUNG EINER LÄNGENVERÄNDERBAREN LENKWELLE UND SPRITZGIESSVORRICHTUNG ZUR DURCHFÜHRUNG DES VERFAHRENS**
METHOD OF MANUFACTURING A LENGTH-ADJUSTABLE STEERING COLUMN AND INJECTION MOLDING APPARATUS FOR CARRYING OUT THE METHOD
PROCÉDÉ DE FABRICATION D'UNE COLONNE DE DIRECTION DE LONGUEUR VARIABLE ET DISPOSITIF DE MOULAGE PAR INJECTION POUR LA MISE EN OEUVRE DUDIT PROCÉDÉ

(30) Priorität: 07.03.2016 DE 102016203627
(43) Veröffentlichungstag der Anmeldung: 16.01.2019
(73) Patentinhaber: thyssenkrupp Presta AG, 9492 Eschen (LI); thyssenkrupp AG, 45143 Essen (DE)
(72) Erfinder: BREUER, Marius, 48307 Rochester Hills, Michigan (US); DUROT, Janick, 9443 Widnau (CH)
(74) Vertreter: thyssenkrupp Intellectual Property GmbH
(86) Internationale Anmeldenummer: PCT/EP2017/054621
(87) Internationale Veröffentlichungsnummer: WO 2017/153208

(56) Entgegenhaltungen:
- DE-A1- 2 132 995
- DE-B- 1 279 326
- FR-A1- 2 432 380
- GB-A- 2 316 150
- JP-A- H07 156 190
- JP-A- H09 122 814
- JP-A- 2010 060 002
- Anonymous: "#055 Designing the Tip Shape of Pin Point Gate | Technical Tutorial - MISUMI", , 10 September 2010 (2010-09-10), pages 1-2, XP055808377, Retrieved from the Internet: URL:https://www.misumi-techcentral.com/tt/ en/mold/2010/09/055-designing-the-tip-shap e-of-pin-point-gate.html [retrieved on 2021-05-27]

## Beschreibung

### Stand der Technik

Die Erfindung betrifft ein Verfahren zur Herstellung einer längenveränderbaren Lenkwelle, umfassend eine Hohlwelle mit einer Innenverzahnung, in der in axialer Richtung teleskopierbar eine formschlüssig eingreifende Zahnwelle angeordnet ist, die einen Verzahnungsbereich mit auf dem Außenumfang angeordneten, sich in axialer Richtung erstreckenden Zähnen aufweist, wobei im Verzahnungsbereich ein Wellenkern im Spritzgussverfahren mit einer Gleitbeschichtung aus thermoplastischem Kunststoff umspritzt wird, mit den Schritten
- Positionieren des Wellenkerns innerhalb eines Formhohlraums eines Spritzgießwerkzeugs koaxial zu einer den Verzahnungsbereich begrenzenden Formfläche, wobei in dem Formhohlraum ein Positionierelement zur Positionierung des Wellenkerns angeordnet ist,
- Einspritzen von schmelzflüssigem Kunststoff in den Formhohlraum zwischen dem Wellenkern und der Formfläche des Formhohlraums durch mindestens eine Einspritzdüse,
- Entnehmen der Zahnwelle aus dem Spritzgießwerkzeug nach dem Erstarren des Kunststoffs.
- Bereitstellen der Hohlwelle und axiales Einführen des Verzahnungsbereichs in die Innenverzahnung.

Aus der DE 10 2014 105 822 A1 ist eine teleskopierbare Lenkwelle bekannt, die in der Lenkung eines Kraftfahrzeugs zur Übertragung des Lenkmoments vom Lenkrad zum Lenkgetriebe dient. Um eine Verstellung des Lenkrads relativ zur Fahrerposition in Längsrichtung, d.h. in Richtung der Längsachse zu ermöglichen, ist zumindest ein Wellenabschnitt zwischen dem Lenkrad und dem Lenkgetriebe telekopierbar und damit längenverstellbar ausgestaltet. Der längenverstellbare Wellenabschnitt kann die fahrerseitige Lenkspindel bilden oder die Lenkzwischenwelle zwischen der Lenkspindel und dem Lenkgetriebe.

Die Lenkwelle ist teleskopartig aufgebaut, mit einem als Hohlwelle ausgebildeten ersten Wellenteil mit einer Innenverzahnung, die sich in axialer Richtung erstreckende Zähne aufweist, und einem gegenüber diesem teleskopierbaren, als Zahnwelle ausgebildeten zweiten Wellenteil mit einer Außenverzahnung, welche zur Drehmomentübertragung formschlüssig in die besagte Innenverzahnung eingreift und eine teleskopartige, axiale Verstellung der beiden Wellenteile relativ zueinander ermöglicht.

Um das Verdrehspiel zu minimieren und das Gleitverhalten beim Teleskopieren zu verbessern, weist der Verzahnungsbereich der Zahnwelle in dem Kontaktbereich mit der Hohlwelle zumindest teilweise eine Gleitbeschichtung aus Kunststoff auf. Diese Gleitbeschichtung ist auf eine aus Metall, in der Regel aus Stahl bestehenden Wellenkern aufgebracht. Durch den relativ zu Stahl weicheren und elastischeren Kunststoff wird das Verdrehspiel reduziert und die Reibung vermindert. Dadurch wird ein spielfreies, präzises Lenken ermöglicht und ein verbessertes Gleitverhalten realisiert, so dass eine geschmeidige und gleichmäßige Längspositionierung des Lenkrads ohne ruckartige Störungen aufgrund von Stick-Slip-Effekten erfolgen kann. Außerdem werden in vorteilhafter Weise die Übertragung von Vibrationen und die Entstehung von Geräuschen unterdrückt.

Damit in der Serienfertigung bei hohen Stückzahlen eine gleichbleibende, optimale Funktion einer derartigen Lenkwelle gewährleistet ist, muss die Gleitbeschichtung über die gesamte Produktion mit möglichst geringen Maßabweichungen zwischen den einzelnen Werkstücken auf den Wellenkern aufgebracht werden. Dies setzt bei einer gattungsgemäßen Umspritzung mit Kunststoff eine entsprechend genaue Positionierung des Wellenkerns im Spritzgießwerkzeug voraus. Die Positionierung muss dabei über die gesamte Länge des Verzahnungsbereichs möglichst exakt koaxial erfolgen, wobei die Längsachse des in der Grundform zylindrischen Wellenkerns über die axiale Länge des Verzahnungsbereichs mit der innenzylindrischen Grundform des Formhohlraums der Spritzgussform übereinstimmt, d.h. innerhalb der die Verzahnung begrenzenden Formflächen des Formhohlraums zentriert ist.

Die Zähne der Zahnwelle können gebildet werden durch auf dem Wellenkern ausgebildete Kernzähne, die im Verzahnungsbereich mit der Gleitbeschichtung beschichtet werden. Dabei wird angestrebt, dass die Gleitbeschichtung insbesondere im Bereich der Zahnflanken für sämtliche Werkstücke einer Serie eine möglichst identische Schichtdicke aufweist. Dafür ist es erforderlich, dass die Wellenkerne bezüglich einer Drehung um die Längsachse mit einer möglichst geringen Winkelabweichung im dem Spritzgießwerkzeug orientiert werden.

Im Stand der Technik wird vorgeschlagen, den Wellenkern mit Passflächen zu versehen, die außerhalb des Verzahnungsbereichs angeordnet sind und die zur Positionierung mit entsprechenden Gegenflächen des Spritzgießwerkzeugs in Kontakt gebracht werden. Nachteilig ist dabei, dass die Ausbildung der Passflächen mit der erforderlichen Genauigkeit einen relativ hohen Fertigungsaufwand bei der Bereitstellung des Wellenkerns erfordert. Derartige Anordnungen werden beispielsweise in der JP 2013141957A beschrieben.

Aus der FR 2 432 380 A1 ist es bekannt, in dem Formhohlraum ein Positionierelement in Form eines vorstehenden Zahns anzuordnen, der eine Winkelorientierung des Wellenkerns ermöglicht. Die Positionierung erfolgt wie im übrigen Stand der Technik an zylindrischen Passflächen, wobei die erwähnten Nachteile auftreten.

Angesichts der vorangehend erläuterten Problematik ist es eine Aufgabe der vorliegenden Erfindung, ein Verfahren und eine Vorrichtung anzugeben, welches einen geringeren Fertigungsaufwand zur Herstellung einer teleskopierbaren Lenkwelle erfordert. Insbesondere soll sichergestellt sein, dass für die Werkstücke der Serienfertigung im Verzahnungsbereich eine gleichmäßige Gleitbeschichtung zur Verfügung gestellt wird.

### Darstellung der Erfindung

Zur Lösung der vorgenannten Problematik wird erfindungsgemäß vorgeschlagen, dass zum Positionieren des Wellenkerns zumindest teilweise im Bereich der Formfläche der Verzahnung mindestens drei Positionierelemente angeordnet werden, die mit Positionierflächen im Bereich der Verzahnung radial von außen an dem Wellenkern anliegen und diesen koaxial in dem Formhohlraum halten, wobei die mindestens drei Positionierelemente gleichmäßig über den Umfang verteilt angeordnet sind.

Zwischen den auf der Außenseite des Wellenkerns anliegenden Positionierflächen der Positionierelemente kann der Wellenkern in dem Formhohlraum auf der Längsachse zentriert und koaxial positionsgenau eingespannt werden. Beim erfindungsgemäßen Verfahren sind Positionierelemente im Gegensatz zum Stand der Technik innerhalb der axialen Erstreckung der Verzahnung angeordnet, also in dem Funktionsbereich der Verzahnung, der in dem Spritzgießwerkzeug mit Kunststoff umspritzt wird.

Beim erfindungsgemäßen Verfahren werden in vorteilhafter Weise Flächen der Verzahnung im Verzahnungsbereich, die zur Gewährleistung einer optimalen Teleskopierbarkeit ohnehin präzise und maßgenau bearbeitet sein müssen, zugleich zur Positionierung des Wellenkerns im Spritzgießwerkzeug genutzt, nämlich zur koaxialen, zentrierten Einspannung im Formhohlraum. Damit entfällt das Erfordernis aus dem Stand der Technik, den Wellenkern mit zusätzlichen Passflächen zu versehen, wodurch der Fertigungsaufwand gesenkt wird. Erfindungsgemäß erfolgt im Gegensatz zum Stand der Technik die Abstützung und Positionierung des Wellenkerns im Funktionsbereich der Zahnwelle, nämlich innerhalb der axialen Erstreckung des Verzahnungsbereichs, der in der zusammengebauten Lenkwelle in der Innenverzahnung der Hohlwelle entlanggleiten kann. Dadurch kann die genaue koaxiale, zentrierte Ausrichtung des als Kernwelle ausgebildeten Wellenkerns in dem Formhohlraum des Spritzgießwerkzeugs ohne zusätzliche bearbeitete Passflächen sichergestellt werden, was in einer über den Umfang gleichmäßig dicke Kunststoff-Gleitbeschichtung der Zähne mit hoher Genauigkeit in radialer Richtung resultiert. Schädliche Toleranzen, die im Stand der Technik beim Positionieren zwischen räumlich von der Verzahnung separat ausgebildeten Passflächen auftreten können und die zu einer deachsierten Anordnung des als Kernwelle ausgebildeten Wellenkerns in dem Formhohlraum führen und die Gleichmäßigkeit der Gleitbeschichtung beeinträchtigen können, können erfindungsgemäß prinzipiell nicht auftreten. Die Toleranzkette ist gegenüber dem Stand der Technik besonders kurz, da die Positionierung direkt über den zu umspritzenden Funktionsbereich erfolgt. Dadurch wird eine höhere Maßhaltigkeit und Qualität der Gleitbeschichtung erreicht.

Die Zahnwelle kann als Vollwelle oder als Hohlwelle ausgebildet sein. Bevorzugt kann der Wellenkern aus einem metallischen Werkstoff, beispielsweise Stahl oder einer Aluminiumlegierung, beschaffen sein.

Der Erfindung liegt die unerwartete Erkenntnis zugrunde, dass durch die Positionierflächen, die bei der erfindungsgemäßen Einspannung des Wellenkerns durch die Positionierelemente innerhalb des Verzahnungsbereichs anliegen, keine Nachteile gegenüber dem Stand der Technik auftreten, der eine Einspannung zwischen Passflächen außerhalb des Verzahnungsbereichs vorsieht. Die im Stand der Technik herrschende Meinung, dass keine Einspannung innerhalb der funktionalen Flächen der Verzahnung erfolgen dürfe, wird erfindungsgemäß überwunden. Es überwiegen die oben genannten Vorteile.

In seiner Grundform kann der Wellenkern bevorzugt zylindrisch ausgebildet sein, also als zylindrische Welle. Bevorzugt ist dabei, dass der Wellenkern von dem zylindrischen Bereich radial nach außen abstehende Kernzähne aufweist, die bevorzugt im Bereich der Zähne des Verzahnungsbereichs angeordnet sind. Die Kernzähne liegen dabei im Wesentlichen innerhalb des Querschnitts der Zähne des Verzahnungsbereichs und bilden somit Zahn-Grundkörper, die zur Ausbildung der Zähne zumindest teilweise mit Kunststoff umspritzt bzw. beschichtet werden. Daraus resultiert eine hohe Formstabilität und Belastbarkeit der Verzahnung. Außerdem wird dadurch eine höhere Betriebssicherheit erreicht, dass die Kernzähne die Hohlwelle formschlüssig mitnehmen können, auch wenn der Kunststoff verschlissen oder entfernt ist. Alternativ können die Zähne auch vollständig aus Kunststoff bestehen, indem sie in einem zylindrischen Bereich ohne Kernzähne an den Wellenkern angespritzt werden. Dadurch kann eine höhere Elastizität und ein optimiertes Gleitverhalten erreicht werden, insbesondere auch, wenn innerhalb einer Verzahnung Zähne mit und ohne Kernzähne kombiniert werden.

Eine vorteilhafte Weiterbildung des erfindungsgemäßen Verfahrens sieht vor, dass mindestens eines der Positionierelemente Positionierflächen aufweist, die in Umfangsrichtung formschlüssig zwischen die Flanken von in Umfangsrichtung benachbarten Kernzähnen eingreifen. Entsprechend liegen dabei beim Einspannen des Wellenkerns im Spritzgießwerkzeug die Positionierflächen spielfrei an den einander in Umfangsrichtung gegenüberliegenden Flanken von in Umfangsrichtung nebeneinander liegenden Kernzähnen an. Dabei erfolgt durch die Positionierelemente eine Fixierung des Wellenkerns in einer definierten Winkelorientierung bezüglich einer Rotation um die Längsachse der Zahnwelle, die identisch ist mit der Längsachse des Wellenkerns bzw. des Formhohlraums.

Das bzw. die Positionierelemente können dabei dafür sorgen, dass die Flanken eines jeden Kernzahns den gleichen Abstand zur korrespondierenden Formfläche des Spritzgießwerkzeugs haben, wodurch die Gleitbeschichtung über sämtliche Zähne der Werkstücke der Serienfertigung eine maßgenaue, gleichbleibende Wandstärke hat.

Bevorzugt weist die Umspritzung eine gleichbleibende Wandstärke auf. Durch die erfindungsgemäß ausgebildeten Positionierelemente ist es möglich, eine besonders konstante Wandstärke der Umspritzung zu realisieren, abgesehen von den Abdrücken der Positionierelemente, da der Wellenkern auf Grund der erfindungsgemäßen Positionierelemente mit einer sehr hohen Präzision zu der Formfläche ausgerichtet ist.

Die Umspritzung kann ebenfalls unterschiedliche Wandstärken aufweisen. Beispielsweise zur Ausbildung eines rein aus der Umspritzung ausgebildeten Zahns, d.h. dieser Zahn ist lediglich durch die Umspritzung ausgebildet und weist keinen Kernzahn auf. Mit anderen Worten ist dieser rein aus der Umspritzung ausgebildete Zahn kernzahnlos.

Zusätzlich oder alternativ kann es vorgesehen sein, dass durch unterschiedliche Wandstärken zwei tragende Bereiche ausgebildet sind, wobei diese Bereiche axial, d.h. in Richtung der Längsachse, voneinander beabstandet sind und eine grössere Wandstärke aufweisen als die Umspritzung außerhalb dieser Bereiche. Somit kann eine definierte Drehmomentenübertragung zwischen Hohlwelle und Zahnwelle realisiert werden, da definierte Kontaktbereiche zwischen der Hohlwelle und der Zahnwelle ausgebildet sind. Zusätzlich oder alternativ kann es vorgesehen sein, dass durch unterschiedliche Wandstärken Schmiertaschen in der Umspritzung ausgebildet sind. Durch die erfindungsgemäßen Positionierelemente ist die durch die Formfläche geformte Umspritzung sehr präzise zum Wellenkern ausgerichtet.

Die erfindungsgemäß ausgebildeten Positionierelemente haben folglich eine Doppelfunktion, nämlich den als Kernwelle ausgebildeten Wellenkern in dem Spritzgießwerkzeug koaxial zu zentrieren und gleichzeitig für eine exakte Winkelorientierung bezüglich der Längsachse zu sorgen. Damit ist der Wellenkern eindeutig innerhalb des Formhohlraums orientiert und fixiert. Dank dieser zusätzlichen Positionierungsfunktion ergibt sich eine zusätzliche Vereinfachung zum Stand der Technik, da die darin erforderlichen, separaten Passflächen zur Winkelorientierung bei der Erfindung ebenfalls durch die maßgenau bearbeiteten Flanken der vorhandenen Kernzähne übernommen werden. Wie für die koaxiale Zentrierung oben beschrieben, wird dabei ebenfalls eine Verbesserung der Maßhaltigkeit erreicht.

Die Positionierelemente können als radial nach innen in den Formhohlraum vorstehende Positionierstifte ausgebildet sein. Die Positionierstifte können beispielsweise einen quadratischen, rechteckigen, vieleckigen oder runden Querschnitt aufweisen, der in axialer Richtung der Zahnwelle gemessen schmaler ist als der Verzahnungsbereich. Die Abmessung in Umfangsrichtung kann bevorzugt in der Größenordnung dem Abstand zweier benachbarter Zähne entsprechen. Von der die Verzahnung begrenzenden inneren Formfläche stehen die Positionierstifte jeweils mit ihrem freien Ende radial nach innen in den Formhohlraum vor. Mindestens eine Positionierfläche ist im Bereich des freien Endes ausgebildet und kann hinsichtlich ihrer Form und Abmessungen an den Bereich des Wellenkerns angepasst sein, gegen den sie zur Positionierung bei der koaxialen Einspannung des Wellenkerns anliegt.

Eine eindeutige koaxiale Zentrierung kann dadurch realisiert werden, dass mindestens drei, bevorzugt genau drei Positionierelemente über den Umfang verteilt angeordnet sind. Es kann vorgesehen sein, dass die drei Positionierelemente in Richtung der Längsachse zueinander versetzt sind oder in einer Radialebene angeordnet sind. Bevorzugt sind die Positionierelemente gleichmäßig über den Umfang verteilt angeordnet, d.h. im Winkelabstand von 180°. Dadurch, dass die Positionierelemente mit gleichem Winkelabstand radial nach innen in den Formhohlraum vorstehen, kann ein in der Spritzgussform aufgenommener Wellenkern zwischen den freien Enden wie in einem Spannfutter, beispielsweise einem Dreibackenfutter, in dem Formhohlraum zuverlässig und genau zentriert eingespannt werden.

Bevorzugt kann vorgesehen sein, dass mehrere Positionierelemente parallel zu einer Radialebene des Formhohlraums angeordnet sind. Die Radialebene steht senkrecht zur gemeinsamen Längsachse von Wellenkern und Zahnwelle. Dadurch wird der Wellenkern durch die Positionierelemente in dem Bereich zentriert eingespannt, wo die Radialebene die Längsachse schneidet. Zur Umsetzung des erfindungsgemäßen Verfahrens kann sich die Radialebene innerhalb des Verzahnungsbereichs befinden.

Eine Weiterbildung der vorgenannten Positionierung sieht vor, dass eine erste Gruppe von Positionierelementen parallel zu einer ersten Radialebene des Formhohlraums angeordnet ist, und mindestens eine zweite Gruppe von Positionierelementen parallel zu einer zweiten Radialebene mit axialem Abstand zur ersten Radialebene. Die erste Radialebene und die zweite Radialebene schneiden die Längsachse wie beschrieben jeweils in einem ersten und einem zweiten Schnittpunkt, auch als Durchstoßpunkt bezeichnet. Entsprechend wird der Wellenkern in der ersten und in der zweiten Radialebene zentriert eingespannt. Folglich wird der Verzahnungsbereich zwischen den Schnittpunkten exakt koaxial in dem Formhohlraum ausgerichtet.

Es kann vorgesehen sein, dass mindestens ein Positionierelement mit axialem Abstand zum Verzahnungsbereich angeordnet ist. Neben einem erfindungsgemäß innerhalb des Verzahnungsbereichs befindlichen Positionierelement kann durch ein außerhalb des Verzahnungsbereichs angeordnetes Positionierelement die Abstützung bzw. Einspannung des Wellenkerns in größerem axialen Abstand erfolgen. Durch die größere Spannlänge kann die genaue koaxiale Ausrichtung vereinfacht werden.

Die Erfindung umfasst eine Spritzgießvorrichtung zur Durchführung des erfindungsgemäßen Verfahrens, umfassend ein Spritzgießwerkzeug mit einem Formhohlraum, der sich entlang einer Längsachse erstreckt und einen Verzahnungsbereich mit Formflächen aufweist, die über einen Abschnitt der Längsachse eine koaxiale Verzahnung begrenzen, wobei in dem Formhohlraum Positionierelemente zur koaxialen Positionierung eines Wellenkerns angeordnet sind.

Spritzgießvorrichtungen zur Herstellung von mit Kunststoff umspritzten Zahnwellen nach dem eingangs beschriebenen Stand der Technik sind im Prinzip bekannt. Diese weisen in dem Formhohlraum Positionierelemente auf, die eine koaxiale Einspannung eines Wellenkerns ermöglichen. In einem Teilbereich seiner Längserstreckung weist der Formhohlraum einen Verzahnungsbereich mit Formflächen zur Umspritzung des Wellenkerns mit einer koaxialen Verzahnung auf. Bei den bekannten Spritzgießvorrichtungen sind die Positionierelemente so angeordnet, dass sie mit ihren Positionierflächen den Wellenkern zwischen außerhalb des Verzahnungsbereichs ausgebildeten Passflächen einspannen.

Die Ausbildung der Passflächen am Wellenkern erfordert einen zusätzlichen Fertigungsaufwand. Außerdem können zwischen den Passflächen und dem Verzahnungsbereich Toleranzen auftreten, welche die Maßhaltigkeit der Kunststoffbeschichtung beeinträchtigen.

Zur Lösung dieser Problematik wird erfindungsgemäß vorgeschlagen, dass zumindest teilweise im Bereich der Formfläche der Verzahnung mindestens drei Positionierelemente angeordnet sind, wobei die mindestens drei Positionierelemente gleichmäßig über den Umfang verteilt angeordnet sind, wobei mindestens ein Positionierelement innerhalb des Verzahnungsbereichs angeordnet ist.

Durch diese Ausbildung der Spritzgießvorrichtung ist es möglich, den Wellenkern positionsgenau innerhalb der Verzahnung in dem Formhohlraum zu positionieren und einzuspannen. Weitere Vorteile und Merkmale sind vorangehend für das erfindungsgemäße Verfahren beschrieben, welches an der erfindungsgemäßen Spritzgießvorrichtung realisierbar sind, um das erfindungsgemäße Verfahren auszuführen.

Eine Weiterbildung der Spritzgießvorrichtung sieht vor, dass mindestens ein Positionierelement an einem radial relativ zum Formhohlraum bewegbaren Schieber angeordnet ist. Zum Positionieren und Einspannen kann der Wellenkern durch radial nach innen gerichtete Bewegung der Schieber zwischen den Positionierelementen zentriert und koaxial eingespannt werden. An einem Positionierelement ist im Bereich seines freien Endes, welches von außen gegen den Wellenkern bewegbar ist, mindestens eine Positionierfläche ausgebildet. Die Positionierfläche wird zum Positionieren und Einspannen erfindungsgemäß im Verzahnungsbereich mit dem Wellenkern in Kontakt gebracht. Daraus ergeben sich die oben beschriebenen Vorteile.

Erfindungsgemäß wird weiterhin eine Zahnwelle zum Einbau in eine Hohlwelle mit einer Innenverzahnung zur Verfügung gestellt, in der die Zahnwelle in Richtung der Längsachse teleskopierbar aufnehmbar ist und mit dieser formschlüssig koppelbar ist, wobei die Zahnwelle einen Verzahnungsbereich mit auf dem Außenumfang angeordneten, sich in axialer Richtung erstreckenden Zähnen aufweist, wobei im Verzahnungsbereich ein Wellenkern im Spritzgussverfahren mit einer Gleitbeschichtung aus thermoplastischem Kunststoff umspritzt ist. Zur Lösung wird erfindungsgemäß vorgeschlagen, dass die Gleitbeschichtung mindestens drei Abdrücke aufweist, wobei die Abdrücke Vertiefungen in der Gleitbeschichtung sind, die einen Durchbruch durch die Gleitbeschichtung bis zur Oberfläche des Wellenkerns umfassen, und die mindestens drei Abdrücke gleichmäßig über den Umfang verteilt angeordnet sind.

Die erfindungsgemäßen Abdrücke sind das Resultat der zuvor beschriebenen Positionierelemente, die den Wellenkern im Spritzgießwerkzeug positionieren. Die Abdrücke, die durch die Positionierelemente in der Gleitbeschichtung ausgebildet sind, können die Möglichkeit bieten, einen fakultativ vorgesehenen Schmierstoff als Vorrat aufzunehmen. Somit kann auf einfache Weise ohne zusätzliche Maßnahmen ein Schmierstoffrückhaltevolumen geschaffen werden, auch als Schmiertasche bezeichnet.

Bevorzugt weist die Gleitbeschichtung genau drei Abdrücke oder genau sechs Abdrücke auf.

Bevorzugt kann es vorgesehen sein, dass die Gleitbeschichtung sechs Abdrücke umfasst, wobei drei Abdrücke in einer ersten Radialebene angeordnet sind und das die anderen drei Abdrücke in einer zweiten Radialebene angeordnet sind, wobei die erste Radialebene einen Abstand in Richtung der Längsachse von der zweiten Radialebene aufweist.

Die erste Radialebene und die zweite Radialebene schneiden die Längsachse wie beschrieben jeweils in einem ersten und einem zweiten Schnittpunkt, auch als Durchstoßpunkt bezeichnet. Durch die Einspannung des Wellenkerns durch die Positionierelemente in der ersten und in der zweiten Radialebene wird der Wellenkern, wie bereits ausgeführt, für die Umspritzung in der Spritzgussform ausgerichtet. Nach der Umspritzung des Wellenkerns bilden sich durch die an dem Wellenkern anliegenden Positionierelemente in der Gleitbeschichtung die erfindungsgemäßen Abdrücke aus.

In einer vorteilhaften Weiterbildung ist der Durchbruch im Bereich einer Zahnflanke eines benachbarten Kernzahns des Wellenkerns ausgebildet.

Vorteilhaft ist es, wenn der Wellenkern aus einem metallischen Werkstoff gebildet ist, besonders bevorzugt ist der Wellenkern aus Stahl oder aus einer Aluminiumlegierung ausgebildet.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Kraftfahrzeuglenkung,
- Figur 2: eine erfindungsgemäße Lenkwelle in perspektivischer Ansicht,
- Figur 3: eine erfindungsgemäße Lenkwelle gemäß Figur 2 in axial auseinander gezogener Darstellung,
- Figur 3a: eine Hohlwelle gemäß Figur 3 in einer perspektivischen Ansicht,Figur 4 eine Zahnwelle einer Lenkwelle gemäß Figur 2 mit Positionierelementen vor der Umspritzung mit Kunststoff,
- Figur 5: eine Zahnwelle einer Lenkwelle gemäß Figur 2 mit Positionierelementen nach der Umspritzung mit Kunststoff,
- Figur 6: einen Querschnitt durch ein erfindungsgemäßes Spritzgießwerkzeug mit einer darin eingespannten Zahnwelle nach dem Einspritzen des Kunststoffs,
- Figur 6a: eine Detailansicht eines Querschnitts durch ein erfindungsgemäßes Spritzgießwerkzeug ähnlich Figur 6 mit einer darin eingespannten Zahnwelle vor dem Einspritzen des Kunststoffs,
- Figur 7: eine vergrößerte Querschnittansicht der im Spritzgießwerkzeug eingespannten Zahnwelle gemäß Figur 6,
- Figur 8: eine Längsschnitt entlang der Längsachse durch ein erfindungsgemäßes Spritzgießwerkzeug,
- Figur 9: eine Längsschnitt entlang der Längsachse wie in Figur 8 durch ein erfindungsgemäßes Spritzgießwerkzeug in einer zweiten Ausführungsform
- Figur 10: Zahnwelle einer Lenkwelle mit Positionierelementen nach der Umspritzung mit Kunststoff in einer alternativen Ausführungsform
- Figur 11: Zahnwelle einer Lenkwelle gemäß Figur 5 ohne Positionierelementen nach der Umspritzung mit Kunststoff
- Figur 12: eine vergrößerte Detailansicht des Querschnitts gemäß Figur 7 mit zurückgezogenem Positionierelement.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

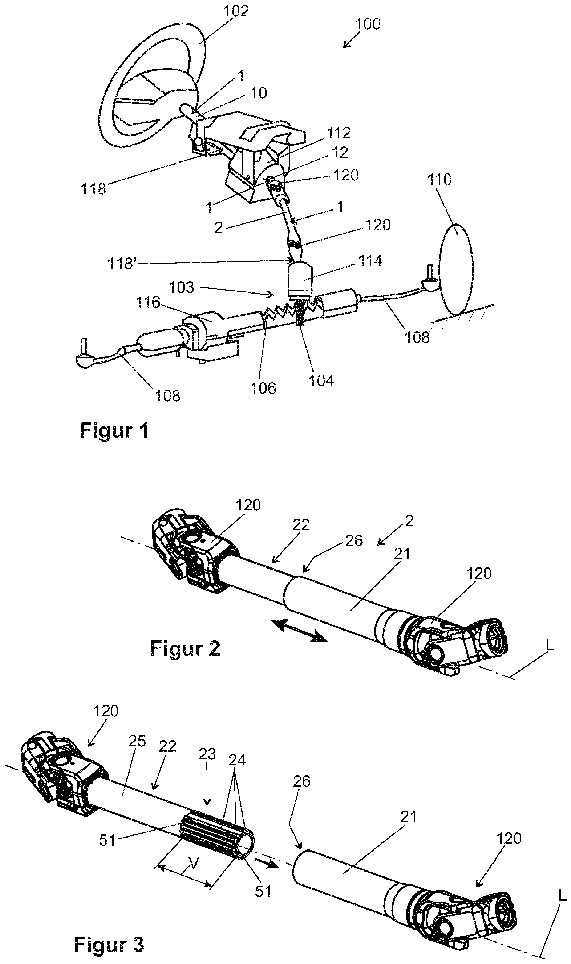

In Figur 1 ist eine Kraftfahrzeuglenkung 100 schematisch dargestellt, wobei ein Fahrer über ein Lenkrad 102 ein entsprechendes Lenk-Drehmoment (Lenkmoment) als Lenkbefehl in eine Lenkwelle 1 einbringen kann. Das Lenkmoment wird über die Lenkwelle 1 auf ein Lenkritzel 104 übertragen, welches mit einer Zahnstange 106 kämmt, die dann ihrerseits über eine Verschiebung der Spurstangen 108 den vorgegebenen Lenkwinkel auf die lenkbaren Räder 110 des Kraftfahrzeugs überträgt.

Eine elektrische Hilfskraftunterstützung kann in Form einer eingangsseitig mit der Lenkwelle 1 gekoppelten Hilfskraftunterstützung 112, einer mit dem Ritzel 104 gekoppelten Hilfs-kraftunterstützung 114 und/oder einer mit der Zahnstange 106 gekoppelten Hilfskraftunter-stützung 116 vorgesehen sein. Die jeweilige Hilfskraftunterstützung 112, 114 oder 116 koppelt ein Hilfsdrehmoment in die Lenkwelle 1 und/oder das Lenkritzel 104 und/oder eine Hilfskraft in die Zahnstange 106 ein, wodurch der Fahrer bei der Lenkarbeit unterstützt wird. Die drei unterschiedlichen, in der Figur 1 dargestellten Hilfskraftunterstützungen 112, 114 und 116 zeigen mögliche Positionen für deren Anordnung.

Üblicherweise ist nur eine einzige der gezeigten Positionen mit einer Hilfskraftunterstützung 112, 114 oder 116 belegt. Das Hilfsdrehmoment bzw. die Hilfskraft, welche zur Unterstützung des Fahrers mittels der jeweiligen Hilfskraftunterstützung 112, 114 oder 116 aufgebracht werden soll, wird unter Berücksichtigung eines von einem Drehmomentsensor 118 ermittelten, vom Fahrer eingebrachten Lenkmoments bestimmt. Alternativ oder in Kombinati-on mit der Einbringung des Hilfsdrehmoments kann von der Hilfskraftunterstützung 112, 114, 116 ein zusätzlicher Lenkwinkel in das Lenksystem eingebracht werden, der sich mit dem vom Fahrer über das Lenkrad 102 aufgebrachten Lenkwinkel summiert.

Die Lenkwelle 1 weist eingangsseitig eine mit dem Lenkrad 102 verbundene Eingangswelle 10 und ausgangsseitig eine mit der Zahnstange 106 über das Lenkritzel 104 verbundene Ausgangswelle 12 auf. Die Eingangswelle 10 und die Ausgangswelle 12 sind drehelastisch über einen in der Figur 1 nicht zu erkennenden Drehstab miteinander gekoppelt. Damit führt ein von einem Fahrer über das Lenkrad 102 in die Eingangswelle 10 eingetragenes Drehmoment immer dann zu einer Relativdrehung der Eingangswelle 10 be-züglich der Ausgangswelle 12, wenn die Ausgangswelle 12 sich nicht exakt synchron zu der Eingangswelle 10 dreht. Diese Relativdrehung zwischen Eingangswelle 10 und Ausgangs-welle 12 kann über einen Drehwinkelsensor gemessen werden und entsprechend aufgrund der bekannten Torsionssteifigkeit des Drehstabes ein entsprechendes Eingangsdreh-moment relativ zur Ausgangswelle 12 bestimmt werden. Auf diese Weise wird durch die Be-stimmung der Relativdrehung zwischen Eingangswelle 10 und Ausgangswelle 12 der Dreh-momentsensor 118 ausgebildet. Ein solcher Drehmomentsensor 118 ist prinzipiell bekannt und kann beispielsweise eine elektromagnetische Sensoranordnung, wie sie weiter unten beschrieben wird, oder durch eine andere Messung der Relativverdrehung realisiert werden.

Entsprechend wird ein Lenkmoment, welches von dem Fahrer über das Lenkrad 102 auf die Lenkwelle 1 beziehungsweise die Eingangswelle 10 aufgebracht wird, nur dann den Eintrag eines Hilfsdrehmoments durch eine der Hilfskraftunterstützungen 112, 114, 116 bewirken, wenn die Ausgangswelle 12 gegen den Drehwiderstand des Drehstabs relativ zu der Eingangswelle 10 verdreht wird.

Der Drehmomentsensor 118 kann auch alternativ an der Position 118' angeordnet sein, wobei dann die Durchbrechung der Lenkwelle 1 in Eingangswelle 10 und Ausgangswelle 12 und die drehelastische Kopplung über den Drehstab entsprechend an einer anderen Position vorliegt, um aus der Relativverdrehung der über den Drehstab mit der Eingangswelle 10 gekoppelten Ausgangswelle 12 eine Relativdrehung und damit entsprechend ein Eingangsdrehmoment und/oder ein einzubringendes Hilfsdrehmoment bestimmen zu können.

Die Lenkwelle 1 gemäß Figur 1 umfasst weiterhin mindestens ein kardanisches Gelenk 120, mittels welchem der Verlauf der Lenkwelle 1 im Kraftfahrzeug an die räumlichen Gegebenheiten angepasst werden kann. Der Lenkzwischenwelle der Lenkwelle 1, der in dem dargestellten Beispiel zwischen zwei kardanischen Gelenken 120 angeordnet ist und die Ausgangswelle 12 mit dem Ritzel 104 des Lenkgetriebes 103 verbindet, ist erfindungsgemäß als längenveränderbare Lenkwelle 2 ausgebildet.

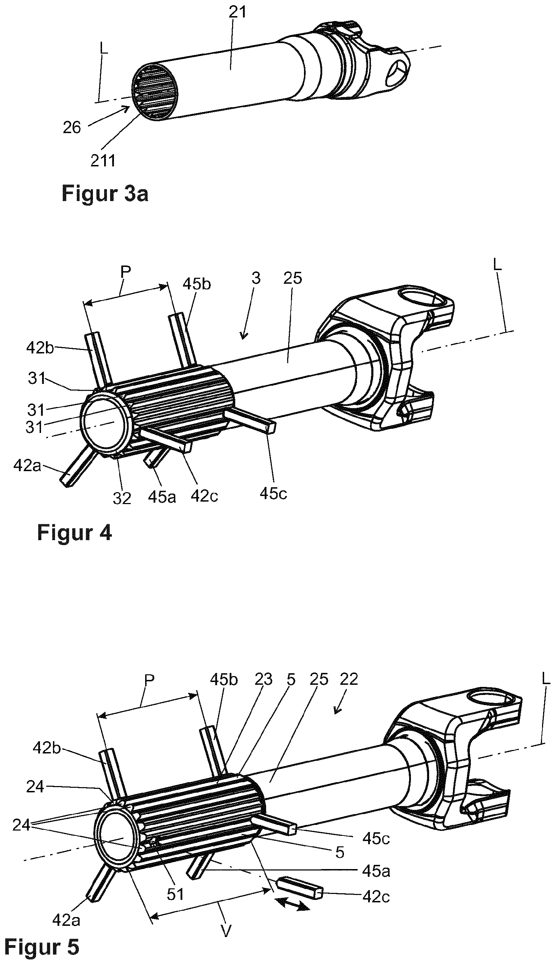

Figur 2 und Figur 3 zeigen die Lenkwelle 2 in montiertem Zustand (Figur 2) und in axialer Richtung auseinander gezogenem Zustand (Figur 3).

Die Lenkwelle 2 umfasst eine Hohlwelle 21 und eine Zahnwelle 22. Die Zahnwelle 22 weist einen Verzahnungsbereich 23 mit einer Mehrzahl von auf dem Außenumfang angeordneten Zähnen 24 auf, die sich in Richtung der Längsachse L, d.h. axial über die Länge V des Verzahnungsbereichs 23 erstrecken.

Aus der Figur 3a ist entnehmbar, dass die Hohlwelle 21 eine zur Zahnwelle 22 hin offene Aufnahmeöffnung 26 mit einer Innenverzahnung 211 aufweist, in welcher der Verzahnungsbereich 23 formschlüssig aufnehmbar ist. Zur Herstellung einer drehmomentschlüssigen Verbindung wird die Zahnwelle 22 ausgehend von der in Figur 3 dargestellten Situation in axialer Richtung, wie mit dem Pfeil angedeutet in Richtung der Längsachse L in die Aufnahmeöffnung 26 der Hohlwelle 21 eingeführt, so dass der in Figur 2 dargestellte montierte Zustand erreicht wird. In diesem zusammengebauten Zustand können sich die Zahnwelle 22 und die Hohlwelle 21 zum Ausgleich von Abstandsunterschieden entlang der Längsachse L relativ zueinander bewegen, wie mit dem Doppelpfeil angedeutet.

Aus Figur 3 ist entnehmbar, dass die Zahnwelle 22 außerhalb des Verzahnungsbereichs 23 einen zylindrischen Schaft 25 aufweist, wobei in dem dargestellten Beispiel die Länge V des Verzahnungsbereichs 23 nur einem Teil der Gesamtlänge der Zahnwelle 22 entspricht.

Figur 4 zeigt eine Zahnwelle 22 im teilfertigen Zustand vor der Umspritzung. Diese wird gebildet durch einen bevorzugt aus Metall, vorzugsweise Stahl bestehenden Wellenkern 3. Im Verzahnungsbereich 23 der fertigen Zahnwelle 22 gemäß Figur 5 weist der Wellenkern 3 Kernzähne 31 auf, die im Bereich der Zähne 24 des fertigen Verzahnungsbereichs 23 angeordnet sind, so dass sie die aus Stahl bestehenden Grundkörper darstellen, die zur Bildung der fertigen Zähne 24 mit Kunststoff umspritzt werden. Die Länge der Kernzähne 31 in Richtung der Längsachse L entspricht im Wesentlichen der Länge V der fertig umspritzten Zähne 24, und zwar abzüglich der Wandstärke einer möglichen stirnseitigen, d.h. axialen Umspritzung der Kernzähne 31.

Aus Figur 4 und 5 geht hervor, dass die Längsachse L der Zahnwelle 22 und des Wellenkerns 3 identisch ist.

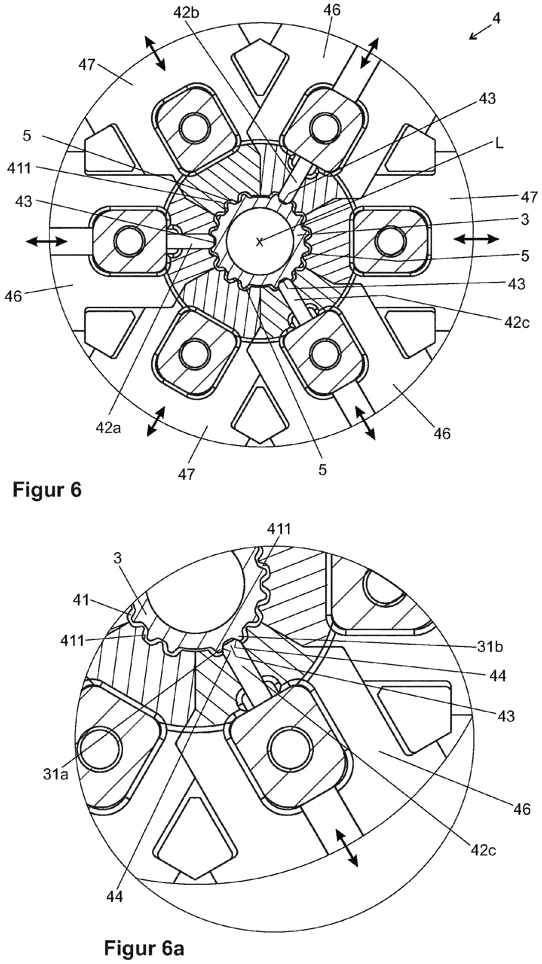

Figur 6 zeigt einen Querschnitt senkrecht zur Längsachse L durch eine Spritzgussform 4 zur Durchführung des erfindungsgemäßen Verfahrens. Insbesondere ist dieser Darstellung entnehmbar, wie der Wellenkern 3 zentriert, d.h. konzentrisch zur Längsachse L zwischen Positionierelementen 42a, 42b und 42c eingespannt ist. Die Anordnung der Positionierelemente 42a, 42b und 42c ist auch in Figur 4 und Figur 5 schematisch gezeigt, wobei die übrige Spritzgussform 4 zur besseren Übersichtlichkeit weggelassen ist.

Die Positionierelemente 42a, 42b und 42c sind stiftförmig ausgebildet, im dargestellten Beispiel mit rechteckigem bzw. quadratischem Querschnitt, dessen Abmessung in Richtung der Längsachse L nur einen Bruchteil der Länge V des Verzahnungsbereichs 23 beträgt. Es ist ebenfalls denkbar und möglich, dass die Positionierelemente einen kreiszylindrischen Querschnitt aufweisen. Im gezeigten Beispiel sind die drei Positionierelemente 42a, 42b und 42c gleichmäßig über den Umfang verteilt angeordnet und sind mit ihren freien Enden 43 radial nach innen gegen die Längsachse L gerichtet, so dass der Wellenkern 3 zwischen den freien Enden 43 in einem Formhohlraum 41 koaxial relativ zur Längsachse L zentriert eingespannt ist. In der Spritzgussform 4 ist der Wellenkern 3 im Verzahnungsbereich 23 von der die Zähne 24 begrenzenden Formfläche 411 umgeben, d.h. diese Formfläche 411 bildet den Negativabdruck des Verzahnungsbereichs 23. Die Formfläche 411 ist ebenfalls koaxial zur Längsachse L orientiert.. Die Formfläche 411 und der Formhohlraum 41 lassen sich besonders gut in der Figur 6a erkennen, in der eine Detailansicht des in der Figur 6 dargestellten Querschnitts des Spritzgießwerkzeugs mit einer darin eingespannten Zahnwelle vor dem Einspritzen des Kunststoffs dargestellt ist.

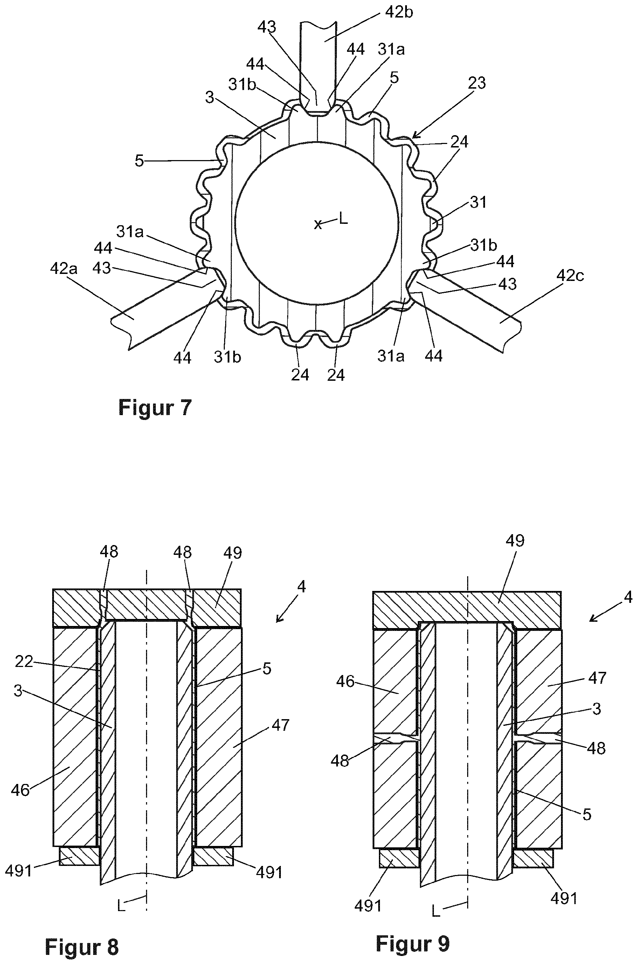

Im Detail ist eine vergrößerte Querschnittansicht der im Spritzgießwerkzeug eingespannten Zahnwelle gemäß Figur 6 in der Figur 7 dargestellt. Die Positionierelemente 42a, 42b und 42c weisen im Bereich ihrer freien Enden 43 Positionierflächen 44 auf. Die Positionierflächen 44 sind so angeordnet, dass sie mit den in Umfangsrichtung einander zugewandten Zahnflanken benachbarter Kernzähne 31a und 31b in Kontakt kommen. Dadurch können die Positionierelemente 42a, 42b und 42c mit den Positionierflächen 44 von außen jeweils formschlüssig zwischen benachbarte Kernzähne 31a und 31b eingreifen. Dadurch ist der Wellenkern 3 durch die Positionierelemente 42a, 42b und 42c winkelgenau bezüglich einer Drehung um die Längsachse L innerhalb des Formhohlraums 41 orientiert und zentriert eingespannt.

Die Positionierelemente 42a, 42b und 42c sind in einer ersten Radialebene angeordnet, nämlich in der in Figur 6 gezeigten Querschnittsebene. Wie Figur 4 und Figur 5 entnehmbar ist, sind zweite Positionierelemente 45a, 45b und 45c, die prinzipiell gleich ausgestaltet sind, in einer zweiten Radialebene angeordnet, die in Richtung der Längsachse L einen Abstand P (siehe Figur 4) zur ersten Radialebene hat. Für das gezeigte Beispiel gilt, dass P kleiner ist als V, so dass sämtliche Positionierelemente 45a, 45b, 45c, 42a, 42b und 42c innerhalb des Verzahnungsbereichs 23 angeordnet sind. Dadurch wird der Wellenkern 3 in den Schnittpunkten der ersten und zweiten Radialebene exakt auf der Längsachse L zentriert und ist im Abstand P entsprechend genau konzentrisch in dem Formhohlraum 41 ausgerichtet.

Um den Wellenkern 3 innerhalb des Formhohlraums 41 einspannen zu können, sind die Positionierelemente 42a, 42b und 42c jeweils an einem Schieber 46 angebracht, der segmentartig ausgebildet ist und relativ zur Längsachse L radial bewegbar ist, wie in Figur 6 mit den Doppelpfeilen angedeutet. Bevorzugt sind jeweils zwei in derselben Umfangsposition angeordnete Positionierelemente 42a und 45a, 42b und 45b, sowie 42c und 45c jeweils an einem Schieber 46 befestigt.

Zwischen den Schiebern 46 sind in Umfangsrichtung Schieber 47 angeordnet, die ebenfalls segmentartig ausgebildet sind und zum Entformen bezüglich der Längsachse L radial zusammen mit den Schiebern 46 kollisionsfrei auseinanderbewegt werden können.

Werden die Schieber 46 und 47 radial auseinander bewegt, kann ein Wellenkern 3 in die Spritzgussform 4 eingebracht werden. Anschließend werden die Schieber 46 und 47 in radialer Richtung nach innen zusammengefahren, wobei der Wellenkern 3 zwischen den Positionierflächen 44 der Positionierelemente 45a, 45b, 45c, 42a, 42b und 42c wie oben beschrieben zentriert und winkelorientiert im Formhohlraum 41 eingespannt wird. Gleichzeitig wird durch das Zusammenfahren der Schieber 46 und 47 die Spritzgussform 4 geschlossen, wobei die Formfläche 411 in Umfangsrichtung geschlossen wird.

Bei geschlossener Spritzgussform 4 wird schmelzflüssiger Kunststoff in den Formhohlraum 41 zwischen die Formfläche 411 und den Außenumfang des Wellenkerns 3 im Verzahnungsbereich 23 eingespritzt. Dieser in Figur 6a gut erkennbare Formhohlraum 41 definiert die Abmessungen und damit die Wandstärke der noch einzubringenden Kunststoff-Umspritzung 5, welche die Gleitbeschichtung bildet. Somit ist die Kunststoff-Umspritzung gleichbedeutend mit der Gleitbeschichtung.

Das Einspritzen des schmelzflüssigen Kunststoffs in die Spritzgussform 4 kann über axiale, stirnseitig am Formhohlraum 41 angeordnete Einspritzdüsen an den Anspritzpunkten 48 erfolgen, wie in Figur 8 schematisch dargestellt. Die Anspritzpunkte 48 befinden sich in einer Stirnwand 49 der Spritzgussform 4, die dem freien Ende des Wellenkerns 3 gegenüberliegt. Zum Entformen kann diese Stirnwand 49 in axialer Richtung von dem Wellenkern 3 wegbewegt werden.

Alternativ können die Anspritzpunkte 48 radial angeordnet sein, wie in Figur 9 gezeigt.

Nach dem Abkühlen und Aushärten der Kunststoff-Umspritzung 5 werden die Schieber 46 und 47 zum Entformen sternförmig radial nach außen auseinanderbewegt, so dass die fertig umspritzte Zahnwelle 22 aus der Spritzgussform 4 entnommen werden kann. Dies ist in Figur 5 beispielhaft anhand des radial nach außen wegbewegten Positionierelements 42c demonstriert. Darin ist ebenfalls erkennbar, dass das Positionierelement 42c in der Kunststoff-Umspritzung 5 innerhalb des Verzahnungsbereichs 23 durch die beim Umspritzen an dem Wellenkern 3 anliegenden Positionierflächen 44 einen Abdruck 51 hinterlassen hat. Entgegen der im Stand der Technik verbreiteten Auffassung ist dieser für die Funktion der längenveränderbaren Lenkwelle 2 unkritisch, so dass die Vorteile des erfindungsgemäßen Verfahrens im Hinblick auf eine rationellere Fertigung und genauere Kunststoff-Umspritzung 5 ohne Einschränkungen genutzt werden können.

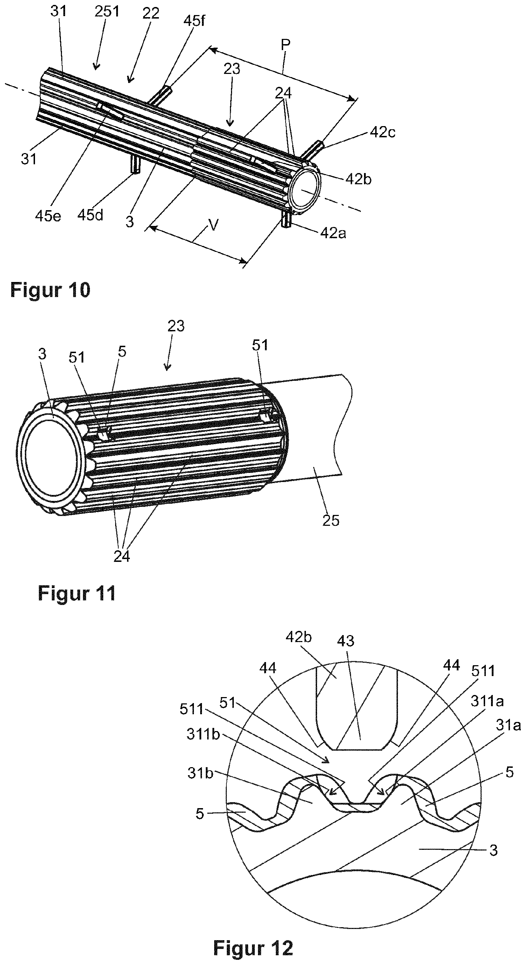

In der Figur 10 ist eine Zahnwelle 22 einer Lenkwelle 1 mit Positionierelementen (42a, 42b, 42c, 45d, 45f, 45g) nach der Umspritzung mit Kunststoff in einer alternativen Ausführungsform dargestellt. Die Zahnwelle 22 weist außerhalb des Verzahnungsbereichs 23 einen kernverzahnten Schaft 251 auf. Die Positionierelemente 42a, 42b und 42c sind in einer ersten Radialebene angeordnet. Die zweiten Positionierelemente 45a, 45b und 45c, die prinzipiell gleich ausgestaltet sind, sind in einer zweiten Radialebene angeordnet, die in Richtung der Längsachse L einen Abstand P zur ersten Radialebene aufweist. Für das gezeigte Ausführungsbeispiel gilt, dass P grösser ist als V, so dass lediglich die Positionierelemente 42a, 42b und 42c innerhalb des Verzahnungsbereichs 23 angeordnet sind. Die Positionierelemente 45d, 45e und 45f sind außerhalb des Verzahnungsbereichs 23 angeordnet. Der Wellenkern 3 weist die Kernzähne 31 auf, die sich über den Verzahnungsbereich 23 hinaus in Richtung der Längsachse L über den gesamten Schaft 251 erstrecken. Der Wellenkern 3 ist bevorzugt als ein gezogenes Profil oder Strangpressprofil ausgebildet. Vorteil dieser Ausführungsform ist es, dass die erste und zweite Radialebene eine große Distanz zueinander aufweisen, so dass eine Schiefstellung der eingespannten Zahnwelle 22 minimiert wird, da ein radialer Versatz der Positionierelemente in der einen Radialebene im Vergleich zum Idealzustand einen geringen Einfluss auf die Schiefstellung nach sich zieht, da die abstützende Länge verhältnismäßig groß ist.

In der Figur 11 ist die Zahnwelle 22 gemäß Figur 4 ohne Positionierelemente nach der Umspritzung mit Kunststoff dargestellt. Die Positionierelemente 42a, 42b und 42c und 45a, 45b und 45c haben in der Kunststoff-Umspritzung 5 innerhalb des Verzahnungsbereichs 23 durch die beim Umspritzen an dem Wellenkern 3 anliegenden Positionierflächen 44 die Abdrücke 51 hinterlassen. Die Abdrücke 51 sind dadurch entstanden, dass der eingespritzte Kunststoff die Positionierelemente 42a, 42b, 42c, 45a, 45b und 45c umströmt und die Positionierelemente 42a, 42b, 42c, 45a, 45b und 45c erst nach dem Erstarren des flüssigen Kunststoffs entfernt wurden. Die Abdrücke 51 sind Vertiefungen in der Kunststoff-Umspritzung 5, die einen Durchbruch 511 durch die Kunststoff-Umspritzung 5 bis zur Oberfläche des Wellenkerns 3 umfassen. Der Durchbruch ist im Bereich der Zahnflanken 311a, 311b der benachbarten Kernzähne 31a, 31b ausgebildet. Durch den Kontakt zwischen der jeweiligen Positionierfläche 44 des Positionierelements 42a, 42b, 42c, 45a, 45b, 45c und der jeweiligen Zahnflanke 311a, 311b des benachbarten Kernzahns 31a, 31b während dem Umspritzen ist diese Kontaktfläche nicht mit dem Kunststoff beschichtet. An dieser Stelle, an der sich auf Grund des Kontaktes zwischen der Positionierfläche 44 und der Zahnflanke 311a, 311b kein Umspritzung ausbilden kann, entsteht der Durchbruch 511 in der Gleitbeschichtung 5.

Der Durchbruch 511 lässt sich besonders gut in der Figur 12 erkennen. Figur 12 zeigt eine vergrößerte Detailansicht des Querschnitts gemäß Figur 7 mit zurückgezogenem Positionierelement 42b. Der Abdruck 51 stellt einen Negativabdruck in der Gleitbeschichtung 5 des freien Endes 43 des Positionierelements 42b dar. Der Abdruck 51 ist eine Vertiefung in der Gleitbeschichtung 5 der einen Durchbruch 511 im Bereich der Zahnflanken 311a, 311b aufweist, da in diesem Bereich keine Gleitbeschichtung 5 ausgebildet ist. Mit anderen Worten ist die äußere Oberfläche des Wellenkerns 3 in dem Bereich des Kontakts zwischen dem Positionierelement und den Zahnflanken 311a, 311b nicht beschichtet. An dieser Stelle ist der Durchbruch 511 ausgebildet, so dass durch den Durchbruch 511 in dem Abdruck 51 die Oberfläche des Wellenkerns 3 zu sehen ist.

### Bezugszeichenliste

- 1: Lenkwelle
- 10: Eingangswelle
- 12: Ausgangswelle
- 100: Kraftfahrzeuglenkung
- 102: Lenkrad
- 103: Lenkgetriebe
- 104: Lenkritzel
- 106: Zahnstange
- 108: Spurstange
- 110: lenkbares Rad
- 112: Hilfskraftunterstützung
- 114: Hilfskraftunterstützung
- 116: Hilfskraftunterstützung
- 118: Drehmomentsensor
- 118': Drehmomentsensor
- 120: Gelenk
- 2: längenveränderbare Lenkwelle
- 21: Hohlwelle
- 22: Zahnwelle
- 23: Verzahnungsbereich
- 24: Zahn
- 25, 251: Schaft
- 26: Aufnahmeöffnung
- 3: Wellenkern
- 31: Kernzahn
- 31a,b: benachbarter Kernzahn
- 311: Zahnflanke
- 4: Spritzgussform
- 41: Formhohlraum
- 411: Formfläche
- 42a,b,c: Positionierelement
- 43: freies Ende
- 44: Positionierfläche
- 45a,b,c: Positionierelement
- 45d,e,f: Positionierelement
- 46, 47: Schieber
- 48: Anspritzpunkt
- 49: Stirnwand
- 491: Stirnwand
- 5: Kunststoff-Umspritzung
- 51: Abdruck
- 511: Durchbruch
- L: Längsachse
- V: Länge Verzahnungsbereich
- R: Radius

## Patentansprüche

1. Verfahren zur Herstellung einer längenveränderbaren Lenkwelle (2), umfassend eine Hohlwelle (21) mit einer Innenverzahnung, in der in axialer Richtung teleskopierbar eine formschlüssig eingreifende Zahnwelle (22) angeordnet ist, die einen Verzahnungsbereich (23) mit auf dem Außenumfang angeordneten, sich in axialer Richtung erstreckenden Zähnen (24) aufweist, wobei im Verzahnungsbereich (23) ein Wellenkern (3) im Spritzgussverfahren mit einer Gleitbeschichtung (5) aus thermoplastischem Kunststoff umspritzt wird, mit den Schritten
- Positionieren des Wellenkerns (3) innerhalb eines Formhohlraums (41) eines Spritzgießwerkzeugs (4) koaxial zu einer den Verzahnungsbereich (23) begrenzenden Formfläche (411), wobei in dem Formhohlraum (41) ein Positionierelement zur Positionierung des Wellenkerns (3) angeordnet ist,
- Einspritzen von schmelzflüssigem Kunststoff in den Formhohlraum (41) zwischen dem Wellenkern (3) und der Formfläche (411) des Formhohlraums (41) durch mindestens eine Einspritzdüse (48),
- Entnehmen der Zahnwelle (22) aus dem Spritzgießwerkzeug (4) nach dem Erstarren des Kunststoffs,
- Bereitstellen der Hohlwelle (21) und axiales Einführen des Verzahnungsbereichs in die Innenverzahnung,
**gekennzeichnet dadurch,**
**dass** zum Positionieren des Wellenkerns (3) zumindest teilweise im Bereich der Formfläche (411) der Verzahnung mindestens drei Positionierelemente (42a, 42b, 42c, 45a, 45b, 45c, 45d, 45e, 45f) angeordnet werden, die mit Positionierflächen (44) im Bereich der Verzahnung radial von außen an dem Wellenkern (3) anliegen und diesen koaxial in dem Formhohlraum (41) halten, wobei die mindestens drei Positionierelemente (42a, 42b, 42c, 45a, 45b, 45c) gleichmäßig über den Umfang verteilt angeordnet sind.

2. Verfahren nach Anspruch 1, **dadurch gekennzeichnet, dass** der Wellenkern (3) radial nach außen abstehende Kernzähne (31) aufweist, die zumindest im Bereich der Zähne des Verzahnungsbereichs (23) angeordnet sind.

3. Verfahren nach Anspruch 2, **dadurch gekennzeichnet, dass** mindestens eines der Positionierelemente (42a, 42b, 42c, 45a, 45b, 45c, 45d, 45e, 45f) Positionierflächen (44) aufweist, die in Umfangsrichtung formschlüssig zwischen die Flanken von in Umfangsrichtung benachbarten Kernzähnen (31a, 31b) eingreifen.

4. Verfahren nach einem der vorangehenden Ansprüche, **dadurch gekennzeichnet, dass** die Positionierelemente (42a, 42b, 42c, 45a, 45b, 45c, 45d, 45e, 45f) als radial nach innen in den Formhohlraum (41) vorstehende Positionierstifte ausgebildet sind, die in axialer Richtung schmaler als die Länge V des Verzahnungsbereichs (23) ausgebildet sind.

5. Verfahren nach einem der vorangehenden Ansprüche, **dadurch gekennzeichnet, dass** mehrere Positionierelemente (42a, 42b, 42c, 45a, 45b, 45c) parallel zu einer Radialebene des Formhohlraums angeordnet sind.

6. Verfahren nach Anspruch 4, **dadurch gekennzeichnet, dass** eine erste Gruppe von Positionierelementen (42a, 42b, 42c) parallel zu einer ersten Radialebene des Formhohlraums (41) angeordnet ist, und mindestens eine zweite Gruppe von Positionierelementen (45a, 45b, 45c, 45d, 45e, 45f) parallel zu einer zweiten Radialebene mit axialem Abstand zur ersten Radialebene.

7. Verfahren nach einem der vorangehenden Ansprüche, **dadurch gekennzeichnet, dass** mindestens ein Positionierelement (45d, 45e, 45f) mit axialem Abstand zum Verzahnungsbereich (23) angeordnet ist.

8. Spritzgießvorrichtung zur Durchführung des Verfahrens nach einem der vorangehenden Ansprüche, umfassend ein Spritzgießwerkzeug (4) mit einem Formhohlraum (41), der sich entlang einer Längsachse (L) erstreckt und einen Verzahnungsbereich (23) mit Formflächen (411) aufweist, die über einen Abschnitt der Längsachse (L) eine koaxiale Verzahnung begrenzen, wobei in dem Formhohlraum (41) Positionierelemente (42a, 42b, 42c, 45a, 45b, 45c, 45d, 45e, 45f) zur koaxialen Positionierung eines Wellenkerns (3) angeordnet sind,
**dadurch gekennzeichnet,**
**dass** zumindest teilweise im Bereich der Formfläche (411) der Verzahnung mindestens drei Positionierelemente (42a, 42b, 42c, 45a, 45b, 45c) angeordnet sind, wobei die mindestens drei Positionierelemente (42a, 42b, 42c, 45a, 45b, 45c) gleichmäßig über den Umfang verteilt angeordnet sind, wobei mindestens ein Positionierelement (42a, 42b, 42c, 45a, 45b, 45c) innerhalb des Verzahnungsbereichs (23) angeordnet ist.

9. Spritzgießvorrichtung nach Anspruch 8, **dadurch gekennzeichnet, dass** mindestens ein Positionierelement (42a, 42b, 42c, 45a, 45b, 45c) an einem radial relativ zur Längsachse (L) des Formhohlraums (41) bewegbaren Schieber (46) angeordnet ist.

10. Zahnwelle (22) zum Einbau in eine Hohlwelle (21) mit einer Innenverzahnung (211), in der die Zahnwelle (22) in Richtung der Längsachse L teleskopierbar aufnehmbar ist und mit dieser formschlüssig koppelbar ist, wobei die Zahnwelle (22) einen Verzahnungsbereich (23) mit auf dem Außenumfang angeordneten, sich in axialer Richtung erstreckenden Zähnen (24) aufweist, wobei im Verzahnungsbereich (23) ein Wellenkern (3) im Spritzgussverfahren mit einer Gleitbeschichtung (5) aus thermoplastischem Kunststoff umspritzt ist, **dadurch gekennzeichnet, dass** die Gleitbeschichtung (5) mindestens drei Abdrücke (51) aufweist, wobei die Abdrücke (51) Vertiefungen in der Gleitbeschichtung (5) sind, die einen Durchbruch (511) durch die Gleitbeschichtung (5) bis zur Oberfläche des Wellenkerns (3) umfassen, und die mindestens drei Abdrücke (51) gleichmäßig über den Umfang verteilt angeordnet sind.

11. Zahnwelle (22) nach Anspruch 10, **dadurch gekennzeichnet, dass** die Gleitbeschichtung (5) sechs Abdrücke (51) umfasst, wobei drei Abdrücke (51) in einer ersten Radialebene angeordnet sind und das die anderen drei Abdrücke (51) in einer zweiten Radialebene angeordnet sind, wobei die erste Radialebene einen Abstand P in Richtung der Längsachse L aufweist.

12. Zahnwelle (22) nach Anspruch 10, **dadurch gekennzeichnet, dass** der Durchbruch (511) im Bereich einer Zahnflanke (311a, 311b) eines benachbarten Kernzahns (31a, 31b) des Wellenkerns (3) ausgebildet ist.

## Claims

1. A method for producing a variable-length steering shaft (2), comprising a hollow shaft (21) with an internal toothing in which a toothed shaft (22) which engages in positively locking fashion is arranged so as to be telescopable in an axial direction, which toothed shaft comprises a toothing region (23) with teeth (24) arranged on the outer circumference and extending in the axial direction, wherein, in the toothing region (23), a shaft core (3) is, in an injection molding process, overmolded with a sliding coating (5) composed of thermoplastic material, having the steps:
- positioning the shaft core (3) within a mold cavity (41) of an injection molding tool (4) coaxially with respect to a mold surface (411) that delimits the toothing region (23), wherein a positioning element for the positioning of the shaft core (3) is arranged in the mold cavity (41),
- injecting molten plastic into the mold cavity (41) between the shaft core (3) and the mold surface (411) of the mold cavity (41) by means of at least one injection nozzle (48),
- removing the toothed shaft (22) from the injection molding tool (4) after the plastic has solidified,
- providing the hollow shaft (21) and axially inserting the toothing region into the internal toothing,
**characterized**
**in that**, for the positioning of the shaft core (3), at least three positioning elements (42a, 42b, 42c, 45a, 45b, 45c, 45d, 45e, 45f) are arranged at least partially in the region of the mold surface (411) of the toothing, which positioning elements, by way of positioning surfaces (44), lie against the shaft core (3) radially from the outside in the region of the toothing and hold said shaft core coaxially in the mold cavity (41), wherein the at least three positioning elements (42a, 42b, 42c, 45a, 45b, 45c) are arranged so as to be distributed uniformly over the circumference.

2. The method as claimed in claim 1, **characterized in that** the shaft core (3) comprises radially outwardly projecting core teeth (31) which are arranged at least in the region of the teeth of the toothing region (23).

3. The method as claimed in claim 2, **characterized in that** at least one of the positioning elements (42a, 42b, 42c, 45a, 45b, 45c, 45d, 45e, 45f) comprises positioning surfaces (44) which, in a circumferential direction, engage in positively locking fashion between the flanks of core teeth (31a, 31b) which are adjacent in a circumferential direction.

4. The method as claimed in one of the preceding claims, **characterized in that** the positioning elements (42a, 42b, 42c, 45a, 45b, 45c, 45d, 45e, 45f) are formed as positioning pins which project radially inwardly into the mold cavity (41) and which, in an axial direction, are formed so as to be narrower than the length V of the toothing region (23).

5. The method as claimed in one of the preceding claims, **characterized in that** multiple positioning elements (42a, 42b, 42c, 45a, 45b, 45c) are arranged parallel to a radial plane of the mold cavity.

6. The method as claimed in claim 4, **characterized in that** a first group of positioning elements (42a, 42b, 42c) is arranged parallel to a first radial plane of the mold cavity (41), and at least one second group of positioning elements (45a, 45b, 45c, 45d, 45e, 45f) is arranged parallel to a second radial plane axially spaced apart from the first radial plane.

7. The method as claimed in one of the preceding claims, **characterized in that** at least one positioning element (45d, 45e, 45f) is arranged axially spaced apart from the toothing region (23).

8. An injection molding device for carrying out the method as claimed in one of the preceding claims, comprising an injection molding tool (4) with a mold cavity (41) which extends along a longitudinal axis (L) and which comprises a toothing region (23) with mold surfaces (411) which, over a section of the longitudinal axis (L), delimit a coaxial toothing, wherein positioning elements (42a, 42b, 42c, 45a, 45b, 45c, 45d, 45e, 45f) for the coaxial positioning of a shaft core (3) are arranged in the mold cavity (41), **characterized**
**in that** at least three positioning elements (42a, 42b, 42c, 45a, 45b, 45c) are arranged at least partially in the region of the mold surface (411) of the toothing, wherein the at least three positioning elements (42a, 42b, 42c, 45a, 45b, 45c) are arranged so as to be distributed uniformly over the circumference, wherein at least one positioning element (42a, 42b, 42c, 45a, 45b, 45c) is arranged within the toothing region (23).

9. The injection molding device as claimed in claim 8, **characterized in that** at least one positioning element (42a, 42b, 42c, 45a, 45b, 45c) is arranged on a slide (46) which is movable radially relative to the longitudinal axis (L) of the mold cavity (41).

10. A toothed shaft (22) for installation into a hollow shaft (21) with an internal toothing (211) in which the toothed shaft (22) can be received, and coupled in positively locking fashion to said toothed shaft, so as to be telescopable in the direction of the longitudinal axis L, wherein the toothed shaft (22) comprises a toothing region (23) with teeth (24) arranged on the outer circumference and extending in the axial direction, wherein, in the toothing region (23), a shaft core (3) is, in an injection molding process, overmolded with a sliding coating (5) composed of thermoplastic material, **characterized in that** the sliding coating (5) comprises at least three impressions (51), wherein the impressions (51) are depressions in the plastics overmolding (5), which comprise an aperture (511) through the sliding coating (5) to the surface of the shaft core (3), and the at least three impressions (51) are distributed uniformly over the circumference.

11. The toothed shaft (22) as claimed in claim 10, **characterized in that** the sliding coating (5) comprises six impressions (51), wherein three impressions (51) are arranged in a first radial plane and the other three impressions (51) are arranged in a second radial plane, wherein the first radial plane comprises a spacing P in the direction of the longitudinal axis L.

12. The toothed shaft (22) as claimed in claim 10, **characterized in that** the aperture (511) is formed in the region of a tooth flank (311a, 311b) of an adjacent core tooth (31a, 31b) of the shaft core (3).

## Revendications

1. Procédé de fabrication d'un arbre de direction (2) modifiable en longueur, comprenant un arbre creux (21) ayant une denture intérieure, dans lequel est agencé de manière télescopique dans la direction axiale un arbre denté (22) s'engageant par complémentarité de forme, qui présente une zone de denture (23) ayant des dents (24) agencées sur la périphérie extérieure, s'étendant dans la direction axiale, un noyau d'arbre (3) étant enrobé par injection dans la zone de denture (23) par un revêtement de glissement (5) en matière thermoplastique par le procédé de moulage par injection, comprenant les étapes suivantes :
- le positionnement du noyau d'arbre (3) à l'intérieur d'une cavité de moulage (41) d'un outil de moulage par injection (4) coaxialement à une surface de moulage (411) délimitant la zone de denture (23), un élément de positionnement étant agencé dans la cavité de moulage (41) pour positionner le noyau d'arbre (3),
- l'injection de matière plastique en fusion dans la cavité de moulage (41) entre le noyau d'arbre (3) et la surface de moulage (411) de la cavité de moulage (41) par au moins une buse d'injection (48),
- le retrait de l'arbre denté (22) de l'outil de moulage par injection (4) après la solidification de la matière plastique,
- la fourniture de l'arbre creux (21) et l'insertion axiale de la zone de denture dans la denture intérieure,
**caractérisé en ce que**
au moins trois éléments de positionnement (42a, 42b, 42c, 45a, 45b, 45c, 45d, 45e, 45f) sont agencés au moins partiellement dans la zone de la surface de moulage (411) de la denture pour positionner le noyau d'arbre (3), qui, avec des surfaces de positionnement (44) dans la zone de la denture, s'appliquent radialement de l'extérieur contre le noyau d'arbre (3) et maintiennent celui-ci coaxialement dans la cavité de moulage (41), les au moins trois éléments de positionnement (42a, 42b, 42c, 45a, 45b, 45c) étant agencés de manière répartie uniformément sur la périphérie.

2. Procédé selon la revendication 1, **caractérisé en ce que** le noyau d'arbre (3) présente des dents de noyau (31) faisant saillie radialement vers l'extérieur, qui sont agencées au moins dans la zone des dents de la zone de denture (23).

3. Procédé selon la revendication 2, **caractérisé en ce qu'**au moins l'un des éléments de positionnement (42a, 42b, 42c, 45a, 45b, 45c, 45d, 45e, 45f) présente des surfaces de positionnement (44) qui, dans la direction périphérique, s'engagent par complémentarité de forme entre les flancs de dents de noyau (31a, 31b) voisines dans la direction périphérique.

4. Procédé selon l'une quelconque des revendications précédentes, **caractérisé en ce que** les éléments de positionnement (42a, 42b, 42c, 45a, 45b, 45c, 45d, 45e, 45f) sont configurés sous forme de broches de positionnement faisant saillie radialement vers l'intérieur dans la cavité de moulage (41), qui sont configurées sous forme plus petite dans la direction axiale que la longueur V de la zone de denture (23).

5. Procédé selon l'une quelconque des revendications précédentes, **caractérisé en ce que** plusieurs éléments de positionnement (42a, 42b, 42c, 45a, 45b, 45c) sont agencés parallèlement à un plan radial de la cavité de moulage.

6. Procédé selon la revendication 4, **caractérisé en ce qu'**un premier groupe d'éléments de positionnement (42a, 42b, 42c) est agencé parallèlement à un premier plan radial de la cavité de moulage (41), et au moins un deuxième groupe d'éléments de positionnement (45a, 45b, 45c, 45d, 45e, 45f) est agencé parallèlement à un deuxième plan radial à une distance axiale du premier plan radial.

7. Procédé selon l'une quelconque des revendications précédentes, **caractérisé en ce qu'**au moins un élément de positionnement (45d, 45e, 45f) est agencé à une distance axiale de la zone de denture (23).

8. Dispositif de moulage par injection pour mettre en œuvre le procédé selon l'une quelconque des revendications précédentes, comprenant un outil de moulage par injection (4) ayant une cavité de moulage (41), qui s'étend le long d'un axe longitudinal (L) et présente une zone de denture (23) ayant des surfaces de moulage (411) qui délimitent une denture coaxiale sur une section de l'axe longitudinal (L), des éléments de positionnement (42a, 42b, 42c, 45a, 45b, 45c, 45d, 45e, 45f) étant agencés dans la cavité de moulage (41) pour positionner coaxialement un noyau d'arbre (3), **caractérisé en ce que**
au moins trois éléments de positionnement (42a, 42b, 42c, 45a, 45b, 45c) sont agencés au moins partiellement dans la zone de la surface de moulage (411) de la denture, les au moins trois éléments de positionnement (42a, 42b, 42c, 45a, 45b, 45c) étant agencés de manière répartie uniformément sur la périphérie, au moins un élément de positionnement (42a, 42b, 42c, 45a, 45b, 45c) étant agencé à l'intérieur de la zone de denture (23) .

9. Dispositif de moulage par injection selon la revendication 8, **caractérisé en ce qu'**au moins un élément de positionnement (42a, 42b, 42c, 45a, 45b, 45c) est agencé sur un coulisseau (46) mobile radialement par rapport à l'axe longitudinal (L) de la cavité de moulage (41).

10. Arbre denté (22) destiné à être monté dans un arbre creux (21) ayant une denture intérieure (211), dans lequel l'arbre denté (22) peut être reçu de manière télescopique dans la direction de l'axe longitudinal L et peut être couplé à celui-ci par accouplement de forme, l'arbre denté (22) présentant une zone de denture (23) ayant des dents agencées sur la périphérie extérieure, s'étendant dans la direction axiale, un noyau d'arbre (3) étant enrobé par injection dans la zone de denture (23) par un revêtement de glissement (5) en matière thermoplastique par le procédé de moulage par injection, **caractérisé en ce que** le revêtement de glissement (5) présente au moins trois indentations (51), les indentations (51) étant des creux dans le revêtement de glissement (5) qui comprennent une percée (511) à travers le revêtement de glissement (5) jusqu'à la surface du noyau d'arbre (3), et les au moins trois indentations (51) étant agencées de manière répartie uniformément sur la périphérie.

11. Arbre denté (22) selon la revendication 10, **caractérisé en ce que** le revêtement de glissement (5) comprend six indentations (51), trois indentations (51) étant agencées dans un premier plan radial et les trois autres indentations (51) étant agencées dans un deuxième plan radial, le premier plan radial présentant une distance P dans la direction de l'axe longitudinal L.

12. Arbre denté (22) selon la revendication 10, **caractérisé en ce que** la percée (511) est réalisée dans la zone d'un flanc de dent (311a, 311b) d'une dent de noyau voisine (31a, 31b) du noyau d'arbre (3).
